# EUROPEAN PATENT SPECIFICATION

(11) **EP 2 768 248 B1**
(45) Date of publication and mention of the grant of the patent: **25.03.2015**
(21) Application number: 14151352.3
(22) Date of filing: 16.01.2014
(51) Int. Cl.: H04W 4/00, H04W 8/00, H04W 8/08

(54) **Electronic apparatus and Wi-Fi P2P connection method thereof**
Elektronische Vorrichtung und Wi-Fi-P2P-Verbindungsverfahren dafür
Appareil électronique et son procédé de connexion P2P wi-fi

(30) Priority: 18.02.2013 KR 20130017147
(43) Date of publication of application: 20.08.2014
(73) Proprietor: Samsung Electronics Co., Ltd, Gyeonggi-do 443-742 (KR)
(72) Inventor: Kim, Yun-seoph, Gyeonggi-do (KR); Kim, Sun-woo, Gyeonggi-do (KR); Shim, Sang-u, Incheon (KR)
(74) Representative: Appleyard Lees

(56) References cited:
- WO-A2-2012/174152
- US-A1- 2010 039 969
- US-A1- 2012 213 110
- MOUSTAFA YOUSSEF LAYLA SHAHAMAT MORGAN KLEENE ASHOK AGRAWALA: "The IEEE 802.11 Active Probing Mechanism: Analysis and Enhancements", WIRELESS NETWORKS, COMMUNICATIONS AND MOBILE COMPUTING, 2005 INTERNATI ONAL CONFERENCE ON MAUI, HI, USA 13-16 JUNE 2005, PISCATAWAY, NJ, USA,IEEE, vol. 2, 13 June 2005 (2005-06-13), pages 1539-1544, XP010888189, ISBN: 978-0-7803-9305-9
- VAIBHAV GUPTA ET AL: "A Characterization of Wireless NIC Active Scanning Algorithms", IEEE WIRELESS COMMUNICATIONS AND NETWORKING CONFERENCE, 2007, WCNC 2007, 11 - 15 MARCH 2007, HONG KONG, IEEE OPERATIONS CENTER, PISCATAWAY, NJ, 1 March 2007 (2007-03-01), pages 2385-2390, XP031088930, ISBN: 978-1-4244-0658-6

## Description

### BACKGROUND

### 1. Field

Apparatuses and methods consistent with exemplary embodiments relate to an electronic apparatus and a wireless fidelity (Wi-Fi) peer-to-peer (P2P) connection method thereof, and more particularly, to an electronic apparatus that can perform a Wi-Fi P2P connection and a Wi-Fi P2P connection method thereof.

### 2. Description of Related Art

Wi-Fi is a wireless communication technology which has been widely used throughout the world under the Institute of Electrical and Electronics Engineers (IEEE) 802.11 standard, and is used in a variety of devices such as notebook computers, mobile phones, game consoles, smart TVs, MP3 players, cameras, printers, etc. Wi-Fi communication is performed through a junction point of an access point. Accordingly, the Wi-Fi installed in a variety of devices may be connected to the access point which can be referred to as a network junction point in order to facilitate communication.

The Wi-Fi Alliance (WFA) recently announced a new standard of Wi-Fi Direct for transmitting data through a direct connection between wireless devices. The Wi-Fi Direct technology is a technology that may be equipped within portable devices and mobile devices, such as televisions (TVs), notebook computers, printers, cameras, etc., and provides a basis ability for content and services to be transmitted between the devices via direct communication between the devices without the need for an additional equipment, such as a router or access point. Accordingly, industry participants are actively developing technologies to satisfy the Wi-Fi Direct standard. The term "Wi-Fi Direct" is a trade name used as a marketing term, whereas the technical specification for the Wi-Fi Direct is referred to as a Wi-Fi peer-to-peer (P2P). Accordingly, in the present disclosure, a communication technology through a direct connection between Wi-Fi terminal devices is referred to as a Wi-Fi P2P hereinafter.

When the existing Wi-Fi Direct is connected, the Wi-Fi P2P communication between devices may be performed through a pre-set channel. Accordingly, if the pre-set channel is being used by other device, there may be an occurrence of interference with the other device.

### SUMMARY

According to the present invention there is provided an apparatus and method as set forth in the appended claims. Other features of the invention will be apparent from the dependent claims, and the description which follows.

One or more exemplary embodiments provide an electronic apparatus that may minimize interference with other devices when a Wi-Fi P2P connection is performed, and a Wi-Fi P2P connection method thereof.

According to an aspect of an exemplary embodiment, there is provided an electronic apparatus including a Wi-Fi module configured to perform Wi-Fi communication; and a controller configured to control the Wi-Fi module to select a plurality of channels, control the Wi-Fi module to perform a scan operation through each of the plurality of channels in response to a Wi-Fi P2P function being executed, and control the Wi-Fi module to determine a connection channel with an external device which will perform Wi-Fi P2P communication based on a number of probe response packets received through each of the plurality of channels.

The controller may control the Wi-Fi module to transmit a probe request packet through each of the plurality of channels, may receive the probe response packets corresponding to the probe request packet, and may control the Wi-Fi module to determine a channel of the plurality of channels having a minimum number of the probe response packets as the connection channel by counting a number of the probe response packets received through each of the plurality of channels.

The controller may control the Wi-Fi module to search for an external device configured to perform the Wi-Fi P2P communication by performing a listen operation and a search operation after the scan operation, and may control the Wi-Fi P2P connection with the external device through the connection channel.

The electronic apparatus may include an input unit configured to receive a user command for executing the Wi-Fi P2P function, wherein the controller executes the Wi-Fi P2P function in response to the user command being received.

According to an aspect of another exemplary embodiment, there is provided a Wi-Fi P2P connection method of an electronic apparatus, the Wi-Fi P2P connection method including performing a scan operation through each of a plurality of channels while sequentially selecting the plurality of channels in response to a Wi-Fi P2P function being executed, and determining a connection channel with an external device that will perform Wi-Fi P2P communication based on a number of response packets received through each of the plurality of channels.

The determining the connection channel may include transmitting a probe request packet through each of the plurality of channels, receiving probe response packets corresponding to the probe request packet, and determining a channel having minimum probe response packets as the connection channel by counting a number of the probe response packets received through each of the plurality of channels when the scan operation is being performed.

The Wi-Fi P2P connection method may include searching for the external device that will perform the Wi-Fi P2P communication by performing a listen operation and a search operation after the scan operation; and performing Wi-Fi P2P connection with the external device through the connection channel.

The Wi-Fi P2P connection method may include performing the Wi-Fi P2P function in response to a user command for executing the Wi-Fi P2P function being received.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram illustrating an electronic apparatus according to an exemplary embodiment;
FIG. 2A is a view illustrating an electronic apparatus that performs Wi-Fi communication using an access point according to an exemplary embodiment;
FIG. 2B is a view illustrating an electronic apparatus that performs Wi-Fi communication according to an exemplary embodiment;
FIG. 3 is a view illustrating a method in which an electronic apparatus performs Wi-Fi P2P communication with an external device according to an exemplary embodiment;
FIG. 4 is a view illustrating a method in which an electronic apparatus performs Wi-Fi P2P communication with an external device according to an exemplary embodiment;
FIG. 5 is a view for illustrating a method for determining a connection channel which will perform Wi-Fi P2P communication according to an exemplary embodiment;
FIG. 6 is a block diagram illustrating a detailed configuration of an electronic apparatus according to an exemplary embodiment;
FIG. 7 is a flowchart illustrating a method for determining a connection channel in an electronic apparatus according to an exemplary embodiment;
FIG. 8 is a view illustrating an electronic apparatus performing Wi-Fi P2P communication with an external device according to an exemplary embodiment; and
FIG. 9 is a flowchart illustrating a Wi-Fi P2P connection method of an electronic apparatus according to an exemplary embodiment.

### DETAILED DESCRIPTION OF EXEMPLARY EMBODIMENTS

The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. The progression of processing steps and/or operations described is an example; however, the sequence of and/or operations is not limited to that set forth herein and may be changed as is known in the art, with the exception of steps and/or operations necessarily occurring in a particular order. In addition, respective descriptions of well-known functions and constructions may be omitted for increased clarity and conciseness.

Additionally, exemplary embodiments will now be described more fully hereinafter with reference to the accompanying drawings. The exemplary embodiments may, however, be embodied in many different forms and should not be construed as being limited to the embodiments set forth herein. These embodiments are provided so that this disclosure will be thorough and complete and will fully convey the exemplary embodiments to those of ordinary skill in the art. The scope is defined not by the detailed description but by the appended claims. Like numerals denote like elements throughout.

The term "...unit" used in the embodiments indicates a component including software or hardware, such as a Field Programmable Gate Array (FPGA) or an Application-Specific Integrated Circuit (ASIC), and the "...unit" performs certain roles. However, the "...unit" is not limited to software or hardware. The "...unit" may be configured to be included in an addressable storage medium or to reproduce one or more processors. Therefore, for example, the "...unit" includes components, such as software components, object-oriented software components, class components, and task components, processes, functions, attributes, procedures, subroutines, segments of program code, drivers, firmware, microcode, circuits, data, a database, data structures, tables, arrays, and variables. A function provided inside components and "...units" may be combined into a smaller number of components and "...units", or further divided into additional components and "...units".

The term "module" as used herein means, but is not limited to, a software or hardware component, such as an FPGA or ASIC, which performs certain tasks. A module may advantageously be configured to reside on an addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

Although the terms used herein are generic terms which are currently widely used and are selected by taking into consideration functions thereof, the meanings of the terms may vary according to the intentions of persons skilled in the art, legal precedents, or the emergence of new technologies. Furthermore, some specific terms may be randomly selected by the applicant, in which case the meanings of the terms may be specifically defined in the description of the exemplary embodiment. Thus, the terms should be defined not by simple appellations thereof but based on the meanings thereof and the context of the description of the exemplary embodiment. As used herein, expressions such as "at least one of," when preceding a list of elements, modify the entire list of elements and do not modify the individual elements of the list.

It will be understood that when the terms "includes," "comprises," "including," and/or "comprising," when used in this specification, specify the presence of stated elements and/or components, but do not preclude the presence or addition of one or more elements and/or components thereof. As used herein, the term "module" refers to a unit that can perform at least one function or operation and may be implemented utilizing any form of hardware, software, or a combination thereof.

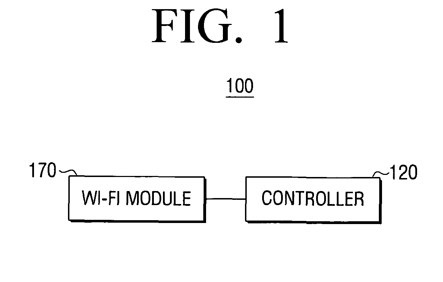

FIG. 1 is a block diagram illustrating an electronic apparatus according to an exemplary embodiment. According to FIG. 1, the electronic apparatus 100 includes a Wi-Fi module 170 and a controller 120.

According to an exemplary embodiment, the Wi-Fi module 170 is a communication module configured to perform Wi-Fi communication. In order to perform Wi-Fi communication, the Wi-Fi module 170 may include a variety of components used for Wi-Fi wireless communication. For example, the Wi-Fi module 170 may include an antenna unit, a radio frequency (RF) transmitting unit for performing rising conversion and amplification of the frequency of transmitted signals, an RF receiving unit which amplifies received signals with low noise and performs descending conversion of the frequency of the signals, a modulating/demodulating unit for the RF signals, a signal process unit, etc.

In accordance with an exemplary embodiment, the Wi-Fi module 170 may perform communication with the network by connecting to the access point or, alternatively, with other external device(s) which can perform Wi-Fi P2P communication according to the WFA Wi-Fi communication standard.

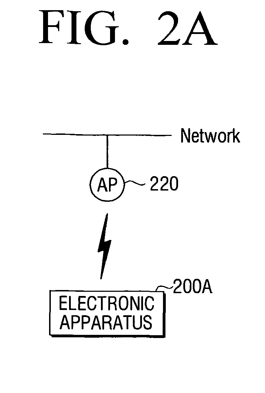

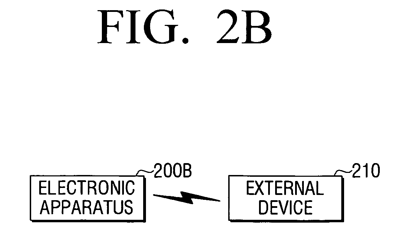

FIGS. 2A and 2B are views illustrating an electronic apparatus which performs Wi-Fi communication according to one or more exemplary embodiments. As illustrated in FIG. 2A, the electronic apparatus 200A can perform Wi-Fi communication by being connected to an access point 220. As illustrated in FIG. 2B, the electronic apparatus 200B can perform Wi-Fi P2P communication with an external device 210 which can perform the Wi-Fi P2P communication.

In accordance with another exemplary embodiment, the controller 120, as shown in FIG. 1, may control overall operations of the electronic apparatus 100. Particularly, the controller 120 may control the Wi-Fi module 170 that then connects to an access point (AP) or performs Wi-Fi P2P communication with an external device which can also perform Wi-Fi P2P communication.

According to an exemplary embodiment, the controller 120 that performs such functions may include a central process unit (CPU), a module to control the electronic apparatus 100, and a read only memory (ROM) and a random access memory (RAM) to store data.

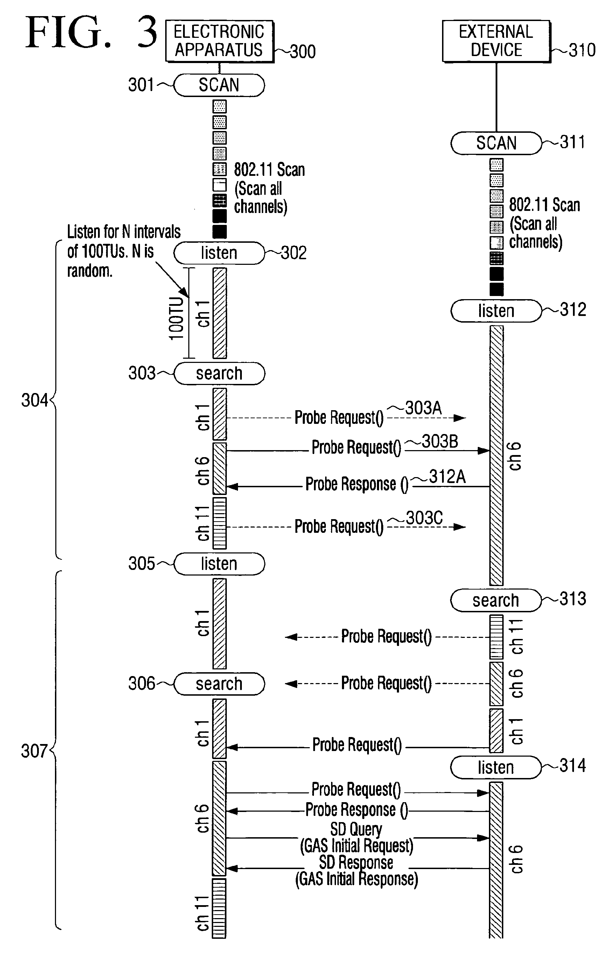

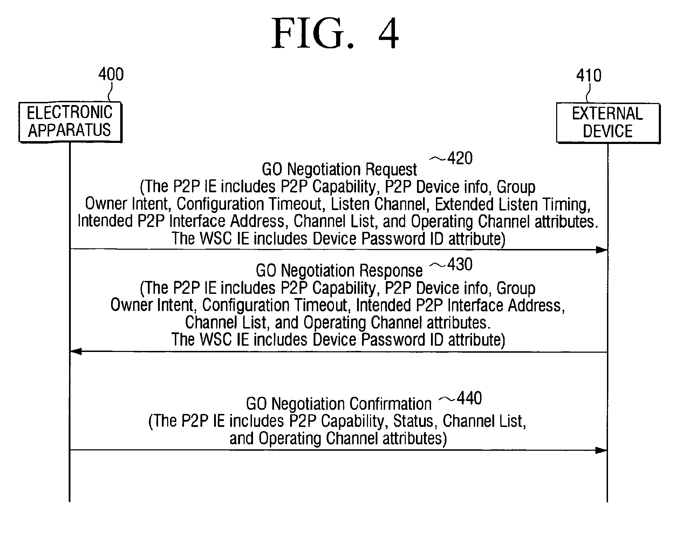

Hereinafter, in accordance with one or more exemplary embodiments, a method used by an electronic apparatus that performs Wi-Fi P2P communication with the external device will be described in more detail with reference to FIGS. 3 and 4.

FIGS. 3 and 4 are views each illustrating a method in which an electronic apparatus performs Wi-Fi P2P communication with an external device according to an exemplary embodiment. A controller in the electronic apparatus controls a Wi-Fi module in the electronic apparatus that performs Wi-Fi P2P communication according to a method defined in the Wi-Fi communication standard with an external device. The Wi-Fi P2P communication method is schematically described with reference to FIGS. 3 and 4.

In accordance with one or more exemplary embodiments, an electronic apparatus as depicted in FIGS. 1 - 6 and 8 may each include a controller and a Wi-Fi module, similar to those described above in FIG. 1, for use in executing the Wi-Fi P2P communication. According to an exemplary embodiment a controller controls a Wi-Fi module to perform a device discovery process defined in the Wi-Fi communication standard for the Wi-Fi P2P communication. The device discovery process refers to a process in which two P2P devices search and discover each other by exchanging information about the devices such as a device name, a device type, etc. through the same channel.

According to an exemplary embodiment, when the device discovery process begins, the controller controls the Wi-Fi module to perform a scan operation 301, and then may repeat a find operation 304 or 307. Here, the find operation 304 consists of a listen operation 302 and a search operation 303. Similarly, if repeated, the second find operation 307 consists of a listen operation 305 and a search operation. 306.

According to an exemplary embodiment, in the scan operation 301, the controller collects information about peripheral devices, such as an external device 310, and the network environment by scanning all channels defined in the Wi-Fi communication standard. For example, in accordance with an exemplary embodiment, if the Wi-Fi P2P function is executed, the controller may control the Wi-Fi module to sequentially select a plurality of channels, and then perform the scan operation 301 through each of the channels. Here, a channel in which the scan operation is performed may be a channel of 2.4GHz band or 5GHz band defined in the Wi-Fi communication standard.

After the scan operation is completed, the controller performs the find operation 304 by repeating the listen operation 302 and the search operation 303.

In detail, in the listen operation 302, the controller may control the Wi-Fi module which selects one of the social channels, for example Ch. 1, 6, and 11, and then waits for a probe request packet transmitted by the external device. In the exemplary embodiment shown in FIG. 3 it can be appreciated that the external device 310 may not be executing a search operation 313 yet and, therefore, a probe may not be received. In another embodiment, a probe could be received during this first listen operation 302 from the external device. The controller may perform the listen operation 302 during a time having a random value of a range between 100 TU (time unit) and N*100TU. If the probe request packet which the external device 310 transmitted in the search operation is received, the controller may control the Wi-Fi module to transmit a probe response packet to the external device 310.

As shown in FIG. 3, after the listen operation 302 passes with not probe signals being exchanged the search operation 303 may execute. The controller may control the Wi-Fi module to transmit the probe request packets (303A, 303B, and 303C) through each of the social channels (Ch. 1, 6 and 11) and may receive the probe response packet 312A through at least one of the social channels (Ch. 1, 6 and 11) which transmitted the corresponding probe request packet 303B.

According to an exemplary embodiment, when each of the devices, which includes the electronic apparatus 300 and the external device 310, may reach a common channel while repeating the find operation 304 or 307, the devices may discover each other by exchanging information about the device such as a device name, a device type, etc. through the probe request packet and the probe response packet.

For example, as illustrated in FIG. 3, if the controller transmits the probe request packet 303B through the Ch. 6 when performing the search operation 303, the external device 310 which performs the listen operation 312 through the Ch. 6 may transmit the probe response packet 312A to the electronic apparatus 300. Accordingly, the controller may discover the external device 310 which can perform the Wi-Fi P2P communication. As shown in FIG. 3, the external device may have a similar scan operation 311, listen operations 312 and 314, and a search operation 313 which may or may not occur at a similar timing with corresponding operations of the electronic apparatus 300. According to an exemplary embodiment, in order for a communication connection to occur either a listen operation of the electronic apparatus 300 and a search operation of the external device 310, or vice versa, must have a sufficient amount of overlap such that probe requests and probe responses can be exchanged.

In accordance with one or more exemplary embodiments, if the device discovery process is completed, the controller may control the Wi-Fi module to perform a group formation operation with the discovered external device 310. Here, the group formation operation refers to a step of determining a P2P group owner (GO) role and a P2P client role between the devices performing the Wi-Fi P2P communication. Accordingly, the device determined as the P2P GO performs the same function as an access point, and the device determined as the P2P client performs the same function as a station.

Such group formation operation is determined by a group owner negotiation protocol of the Wi-Fi P2P connection process, and is schematically illustrated in FIG. 4.

For example, as illustrated in FIG. 4, the controller may perform the group formation operation by transmitting a GO negotiation request packet 420 to the searched external device through a common channel, and then transmitting GO negotiation confirmation 440 to the external device 410 if a GO negotiation response packet 430 is received from the external device 400.

In this case, the controller may determine the device that will operate as the P2P GO by using information (e.g., group owner intent) contained in the each packet, and then may control the Wi-Fi module depending on the determination so that the electronic apparatus 400 operates as the P2P GO or the P2P client. Then, the controller may control the Wi-Fi module to perform the Wi-Fi P2P communication with the external device 410 through the connection channel (namely, operating channel).

As described above, the controller may control the Wi-Fi module to perform the Wi-Fi P2P communication according to the Wi-Fi communication standard.

On the other hand, according to another exemplary embodiment, the controller may adaptively set the connection channel with the external device which may perform the Wi-Fi P2P communication.

According to an exemplary embodiment, when performing the scan operation, the controller may control the Wi-Fi module to determine the connection channel to be used with the external device which will perform the Wi-Fi P2P communication based on the number of probe response packets being received through each of the channels. Particularly, the controller may receive the probe response packet corresponding to the probe request packet by transmitting the probe request packet through each of the channels during the scan operation, and then may determine that a channel having a minimum number of probe response packets is the connection channel by counting the number of the probe response packets being received through each of the channels.

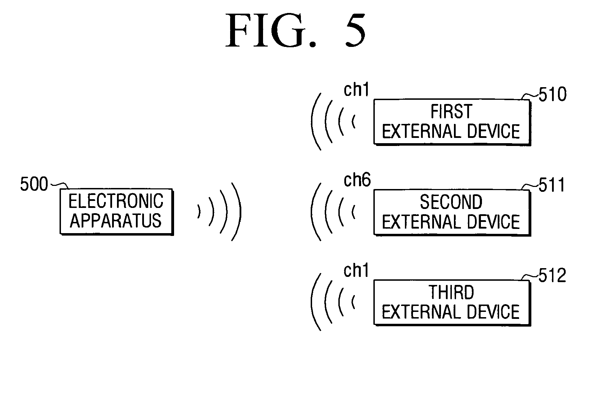

For example, according to an exemplary embodiment, the controller may transmit the probe request packet through each of the channels while performing the scan operation. In this case, if there is a plurality of external devices which perform the listen operation in different channels, each of the external devices 510, 511, and 512, as shown in FIG. 5, may transmit the probe response packet to the electronic apparatus 500 through the channel in which each of the external devices performs the listen operation.

For example, according to an exemplary embodiment, as illustrated in FIG. 5, a first external device 510 may transmit a probe response packet to the electronic apparatus 500 through Ch. 1, a second external device 511 may transmit a probe response packet to the electronic apparatus 500 through Ch. 6, and a third external device 512 may transmit a probe response packet to the electronic apparatus 500 through Ch. 1.

The controller may count the number of the probe response packets received through each of the channels. In the above-described embodiment, because the first external device 510 and the third external device 512 transmit the probe response packet to the electronic apparatus 500 through Ch. 1 and the second external device 511 transmits the probe response packet to the electronic apparatus 500 through Ch. 6, the controller may count the number of the received probe response packets by each channel noting that two probe response packets were received through Ch. 1, and one probe response packet was received through Ch. 6.

Accordingly, the controller may set the connection channel with the external device which will perform the Wi-Fi P2P communication by using the counting result. For example, according to an exemplary embodiment, the controller may determine a channel having the minimum number of probe response packets as the connection channel with the external device which will perform the Wi-Fi P2P communication. In other words, in the above described embodiment, the controller may set the Ch. 6 as the connection channel which will perform the Wi-Fi P2P communication. In accordance with another embodiment it can be appreciated that a setting the channel may be determined based on probe packet's signal to noise ratio or other data stored within the probe packet that indicates channel usage comparatively to the other channels.

According to an exemplary embodiment after the scan operation, the controller may search external devices which will perform the Wi-Fi P2P communication by repeatedly performing the listen operation and the search operation, and then may perform the Wi-Fi P2P connection with the searched external device through the determined connection channel. In detail, the controller may search the external devices which can perform the Wi-Fi P2P communication through the find operation after the scan operation, and may perform the Wi-Fi P2P connection with at least one of the searched external devices by using the determined connection channel as a connection channel. In other words, in the above-described embodiment, if the first, second, and third external devices 510, 511, and 512 are detected by searching through the find operation, the controller may perform the Wi-Fi P2P connection with at least one of the first, second, and third external devices 510, 511, and 512 through the Ch. 6, and may control to perform communication with the connected external device.

According to an exemplary embodiment, because the number of the probe response packets received from the external device when the scan operation is performed is considered, the devices that will be configured on a network by using the Wi-Fi P2P may not be formed such that they use the same channel. Therefore, controlling such interference between the devices may ensure optimal network performance.

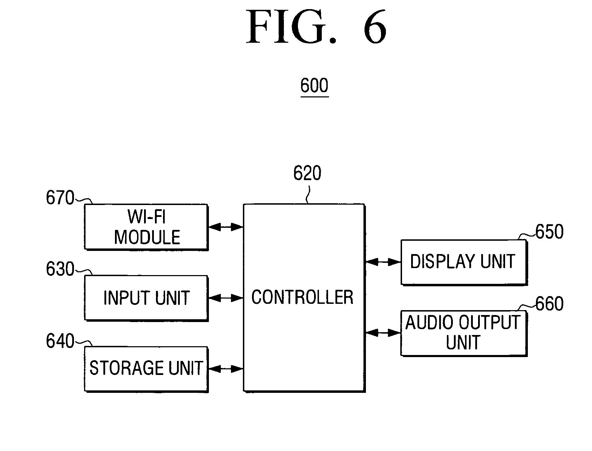

FIG. 6 is a block diagram illustrating a detail configuration of an electronic apparatus according to an exemplary embodiment. According to FIG. 6, the electronic apparatus 600 may include a Wi-Fi module 670, a controller 620, an input unit 630, a storage unit 640, a display unit 650, and an audio output unit 660. Their operations may be controlled by the controller 620.

According to one or more exemplary embodiments, descriptions of the Wi-Fi module 670 and the controller 620 as illustrated in FIG. 6 may be similar to those of the Wi-Fi module and the controller with reference to FIGS. 1 and 5; therefore, detailed descriptions thereof will be omitted.

Also, FIG. 6 illustrates a variety of components which may be contained in the electronic apparatus 600 according to an exemplary embodiment. However, the electronic apparatus 600 is not required to include all of the components, and is not limited to have only these components. In other words, depending on the type of the electronic apparatus 600, some of the components may be removed, new components may be added, or some of the components may be replaced by other components.

According to an exemplary embodiment, the input unit 630 receives a variety of user commands. In detail, the input unit 630 may receive a user command for executing the Wi-Fi P2P function. Accordingly, if the user command for executing the Wi-Fi P2P function is input, the controller 620 may execute the Wi-Fi P2P function.

Also, the input unit 630 may receive a user command for selecting an external device which will perform the Wi-Fi P2P communication among the searched external devices which can perform the Wi-Fi P2P communication. Accordingly, the controller 620 may control to perform the Wi-Fi P2P communication with the external device selected by the user among the searched external devices.

The input unit 630 may be implemented as an input panel. The input panel may include a touch pad, a key pad equipped with various function keys, number keys, special keys, character keys, etc. or a touch screen.

For example, if the input unit 630 is implemented by the touch screen method, the controller 620 may display a menu in which the user command can be input on the touch screen. Particularly, the controller 620 may display a list about the searched external devices which can perform the Wi-Fi P2P communication on the touch screen, and may control the Wi-Fi P2P communication with an external device selected from the list.

On the other hand, in an exemplary embodiment, the controller 620 receives a separate user command for executing the Wi-Fi P2P function; however, this is only one example. In other words, according to another exemplary embodiment the controller 620 may execute the Wi-Fi P2P function, without the separate user command, when the electronic apparatus 600 is turned on.

Also, in the above-embodiment, the controller 620 performs the Wi-Fi P2P communication with the external device selected by the user; however, this is only one example. Accordingly, in another exemplary embodiment, the controller 620 may automatically perform the Wi-Fi P2P communication connection with the searched external device without the separate user command.

According to an exemplary embodiment, the storage unit 640 stores various data, application programs, and execution programs for driving and controlling the electronic apparatus 600. For example, the storage unit 640 may be equipped with a ROM for storing programs for performing the operations of the controller 620, a RAM for storing temporarily data caused by performing the operations of the controller 620, etc. The storage unit 640 may also include an electrically erasable and programmable ROM (EEPROM) for storing various reference data.

According to an exemplary embodiment, the display unit 650 may output various display screens which can be provided by the electronic apparatus 600. Also, the display unit 650 may be implemented as a touch screen with the input unit 630. In this case, the display unit 650 may display a menu in which the user can input user commands.

According to an exemplary embodiment, the display unit 650 may be implemented as a liquid crystal display (LCD), an organic light emitting display (OLED), a plasma display panel (PDP), etc.

According to an exemplary embodiment, the audio output unit 660 may be implemented as an output port, such as a jack, etc., a speaker, etc., and may output various audios.

On the other hand, according to another exemplary embodiment, the display unit 650 and the audio output unit 660 may output various content. Here, the content may include moving images, images, text, etc. For example, the display unit 650 may output videos to configure the content, and the audio output unit 660 may output audios to configure the content.

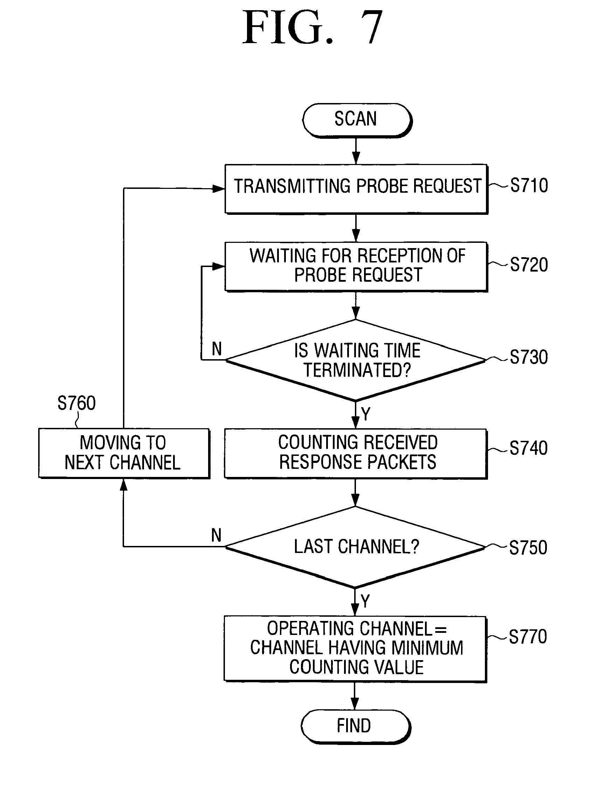

FIG. 7 is a flowchart illustrating a method for determining a connection channel in an electronic apparatus an exemplary embodiment.

As illustrated in FIG. 7, if the Wi-Fi P2P function is executed, the electronic apparatus performs a device discovery process. Here, the device discovery process consists of a scan operation and a find operation.

When the scan operation is being performed, an electronic apparatus transmits a probe request packet through a channel (S710). Then, the electronic apparatus waits for reception of a probe response packet from the channel through which the probe request packet is transmitted (S720). After that, after the waiting time is terminated (S730-Y), the electronic apparatus counts the number of the probe response packets received through the channel (S740).

Then, the electronic apparatus determines whether the channel which transmitted the probe request packet is the last channel (S750). As a result of the determination, if the channel which transmitted the probe request packet is not the last channel (S750-N), the electronic apparatus repeats the operations to transmit a probe request packet through a next channel (S760), and to count the number of the probe response packets received from the corresponding channel.

On the other hand, if the channel which transmitted the probe request packet is the last channel (S750-Y), the electronic apparatus determines a channel which transmitted a minimum number of the probe response packets as a connection channel (namely, an operation channel) based on the number of the probe response packets received through each of the channels (S770).

After that, the electronic apparatus may search external devices which can perform the Wi-Fi P2P communication by performing the find operation, and then may perform the Wi-Fi P2P connection with the searched external device through the determined connection channel.

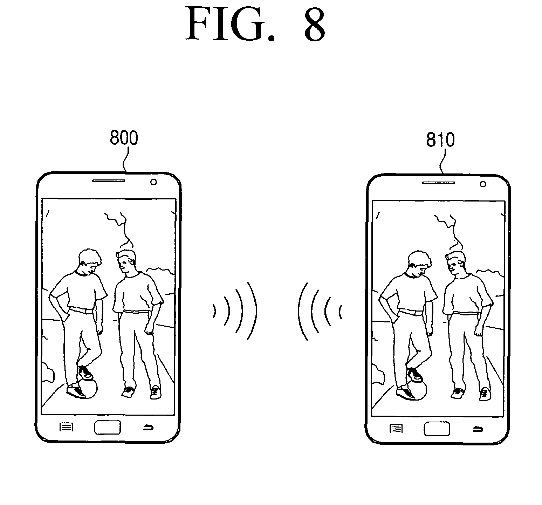

FIG. 8 is a view illustrating an example of an electronic apparatus 800 according to an exemplary embodiment performing Wi-Fi P2P communication with an external device 810.

The electronic apparatus 800 and the external device 810 according to an exemplary embodiment may be implemented as an electronic apparatus which can be equipped with a Wi-Fi communication module, such as a TV, a mobile device, a notebook computer, a printer, a camera, etc. FIG. 8 illustrates a exemplary embodiment in which the electronic apparatus 800 and the external device 810 are implemented as mobile devices.

The electronic apparatus 800 determines the connection channel by using the method described with reference to FIGS. 1 to 7, and then may perform the Wi-Fi P2P communication with the external device 810 through the determined connection channel. The electronic apparatus 800 may then transmit images stored in the electronic apparatus 800 to the external device 810 through the established Wi-Fi P2P communication.

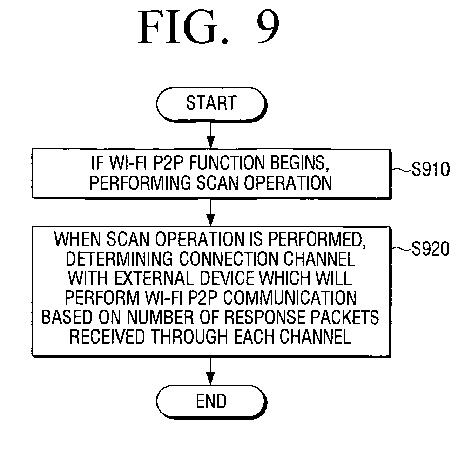

FIG. 9 is a flowchart illustrating a method of Wi-Fi P2P connection of an electronic apparatus according to an exemplary embodiment.

First, if the Wi-Fi P2P function is executed, a plurality of channels is sequentially selected, and then a scan operation is performed through each of the channels (S910). In this case, if a user command for executing the Wi-Fi P2P function is input, the Wi-Fi P2P function may be executed.

When the scan operation is being performed, a connection channel which will be connected to an external device which will perform the Wi-Fi P2P communication is determined based on the number of response packets received through each of the channels (S920).

During the scan operation, a probe request packet is transmitted through each of the channels, probe response packets corresponding to the probe request packet are received, and a channel having a minimum number of probe response packets may be determined as the connection channel by counting the number of the probe response packets received through each of the channels.

After the scan operation, the external devices, which will perform the Wi-Fi P2P communication, may be searched by repeatedly performing a listen operation and a search operation, and then the Wi-Fi P2P connection may be performed with the searched external device through the determined connection channel.

In accordance with one or more exemplary embodiments, a non-transitory computer-readable medium in which a program to execute a control method according to an exemplary embodiment is stored may be provided.

According to one or more exemplary embodiments, the non-transitory computer-readable medium refers to a medium that can store data in a semi-permanent manner and that can be read by devices. For example, the above-described various applications or programs may be stored in the non-transitory computer readable medium such as a CD, a DVD, a hard disc, a Blu-ray disc, an USB, a memory card, a ROM, etc., and then may be provided with it.

Also, the above-described block diagram illustrated about the display apparatus and a server does not illustrate a bus. However, communication between the components in the display apparatus and the server may be achieved through the bus. Also, each of the devices may include a processor such as a CPU, a microprocessor, etc. for performing various steps as described above.

According to various exemplary embodiments, when a scan operation is performed for Wi-Fi P2P communication, a channel through which a minimum number of response packets are received may be set as a connection channel for the Wi-Fi P2P communication by considering the number of the response packets received from external devices through each of channels. Accordingly, when performing the Wi-Fi P2P communication, interference with the external devices may be minimized.

Although a few preferred embodiments have been shown and described, it will be appreciated by those skilled in the art that various changes and modifications might be made without departing from the scope of the invention, as defined in the appended claims.

In summary, an electronic apparatus for Wi-Fi Peer-to-Peer (P2P) communication and a method thereof is provided. The electronic apparatus includes a Wi-Fi module configured to perform Wi-Fi communication, and a controller configured to control the Wi-Fi module to sequentially select a plurality of channels, and then control the Wi-Fi module to perform a scan operation through each of the plurality of channels, if in response to a Wi-Fi P2P function is being executed. Further, while the scan operation is being performed, the controller controls the Wi-Fi module to determine a connection channel with an external device which will perform Wi-Fi P2P communication based on a number of probe response packets received through each of the plurality of channels.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An electronic apparatus comprising:
a Wi-Fi module configured to perform Wi-Fi communication; and
a controller configured to control the Wi-Fi module to select a plurality of channels, control the Wi-Fi module to perform a scan operation through each of the plurality of channels in response to a Wi-Fi Peer-to-Peer (P2P) function being executed, and control the Wi-Fi module to determine a connection channel with an external device which will perform Wi-Fi P2P communication based on a number of probe response packets received through each of the plurality of channels.

2. The electronic apparatus of claim 1, wherein the controller is further configured to control the Wi-Fi module to transmit a probe request packet through each of the plurality of channels, receive the probe response packets corresponding to the probe request packet, and control the Wi-Fi module to determine a channel of the plurality of channels having a minimum number of the probe response packets as the connection channel by counting a number of the probe response packets received through each of the plurality of channels.

3. The electronic apparatus of claim 1 or 2,
wherein the controller is further configured to control the Wi-Fi module to search for an external device configured to perform the Wi-Fi P2P communication by performing a listen operation and a search operation after the scan operation, and is configured to control the Wi-Fi P2P connection with the external device through the connection channel.

4. The electronic apparatus of anyone of claims 1 to 3, further comprising:
an input unit configured to receive a user command for executing the Wi-Fi P2P function,
wherein the controller executes the Wi-Fi P2P function in response to the user command being received.

5. A Wi-Fi Peer-to-Peer (P2P) connection method for an electronic apparatus, the Wi-Fi P2P connection method comprising:
performing a scan operation through each of a plurality of channels while sequentially selecting the plurality of channels in response to a Wi-Fi P2P function being executed, and
determining a connection channel with an external device that will perform Wi-Fi P2P communication based on a number of response packets received through each of the plurality of channels.

6. The Wi-Fi P2P connection method of claim 5, wherein the determining the connection channel comprises:
transmitting a probe request packet through each of the plurality of channels;
receiving probe response packets corresponding to the probe request packet; and
determining a channel having minimum probe response packets as the connection channel by counting a number of the probe response packets received through each of the plurality of channels when the scan operation is being performed.

7. The Wi-Fi P2P connection method of claim 5 or 6, further comprising:
searching for the external device that will perform the Wi-Fi P2P communication by performing a listen operation and a search operation after the scan operation; and
performing Wi-Fi P2P connection with the external device through the connection channel.

8. The Wi-Fi P2P connection method of anyone of claims 5 to 7, further comprising:
performing the Wi-Fi P2P function in response to a user command for executing the Wi-Fi P2P function being received.

## Patentansprüche

1. Elektronische Vorrichtung, die Folgendes aufweist:
ein Wi-Fi-Modul, das konfiguriert ist, eine Wi-Fi-Kommunikation durchzuführen; und
einen Kontroller, der konfiguriert ist, das Wi-Fi-Modul zu steuern, eine Vielzahl von Kanälen auszuwählen, das Wi-Fi-Modul zu steuern, eine Abtastoperation durch jeden der Vielzahl der Kanäle als Reaktion darauf durchzuführen, dass eine Wi-Fi-Peer-to-Peer- (P2P-)Funktion ausgeführt wird, und das Wi-Fi-Modul zu steuern, einen Verbindungskanal mit einer externen Vorrichtung, die eine Wi-Fi-P2P-Kommunikation durchführen wird, beruhend auf einer Anzahl von Probe-Response-Paketen zu bestimmen, die durch jeden der Vielzahl der Kanäle empfangen werden.

2. Elektronische Vorrichtung nach Anspruch 1, wobei der Kontroller ferner konfiguriert ist, das Wi-Fi-Modul zu steuern, ein Probe-Request-Paket durch jeden der Vielzahl der Kanäle zu senden, die Probe-Response-Pakete zu empfangen, die dem Probe-Request-Paket entsprechen, und das Wi-Fi-Modul zu steuern, einen Kanal der Vielzahl der Kanäle, der eine minimale Anzahl der Probe-Response-Pakete aufweist, durch Zählen einer Anzahl der Probe-Response-Pakete, die durch jeden der Vielzahl der Kanäle empfangen werden, als den Verbindungskanal zu bestimmen.

3. Elektronische Vorrichtung nach Anspruch 1 oder 2,
wobei der Kontroller ferner konfiguriert ist, das Wi-Fi-Modul zu steuern, nach einer externen Vorrichtung, die konfiguriert ist, die Wi-Fi-P2P-Kommunikation durchzuführen, durch Durchführen einer Lauschoperation und einer Suchoperation nach der Abtastoperation zu suchen, und konfiguriert ist, die Wi-Fi-P2P-Verbindung mit der externen Vorrichtung durch den Verbindungskanal zu steuern.

4. Elektronische Vorrichtung nach einem der Ansprüche 1 bis 3, die ferner aufweist:
eine Eingabeeinheit, die konfiguriert ist, einen Benutzerbefehl zum Ausführen der Wi-Fi-P2P-Funktion zu empfangen,
wobei der Kontroller die Wi-Fi-P2P-Funktion als Reaktion darauf ausführt, dass der Benutzerbefehl empfangen wird.

5. Wi-Fi-Peer-to-Peer- (P2P-) Verbindungsverfahren für eine elektronische Vorrichtung, wobei das Wi-Fi-P2P-Verbindungsverfahren die folgenden Schritte aufweist:
Durchführen einer Abtastoperation durch jeden einer Vielzahl von Kanälen während einer sequentiellen Auswahl der Vielzahl der Kanäle als Reaktion darauf, dass eine Wi-Fi-P2P-Funktion ausgeführt wird, und
Bestimmen eines Verbindungskanals mit einer externen Vorrichtung, die eine Wi-Fi-P2P-Kommunikation durchführen wird, beruhend auf einer Anzahl von Response-Paketen, die durch jeden der Vielzahl der Kanäle empfangen werden.

6. Wi-Fi-P2P-Verbindungsverfahren nach Anspruch 5, wobei das Bestimmen des Verbindungskanals aufweist:
Senden eines Probe-Request-Pakets durch jeden der Vielzahl der Kanäle;
Empfangen von Probe-Response-Paketen, die dem Probe-Request-Paket entsprechen; und
Bestimmen eines Kanals, der minimale Probe-Response-Pakete aufweist, als den Verbindungskanal durch Zählen einer Anzahl der Probe-Response-Pakete, die durch jeden der Vielzahl der Kanäle empfangen werden, wenn die Abtastoperation durchgeführt wird.

7. Wi-Fi-P2P-Verbindungsverfahren nach Anspruch 5 oder 6, das ferner aufweist:
Suchen nach der externen Vorrichtung, die die Wi-Fi-P2P-Kommunikation durchführen wird, durch Durchführen einer Lauschoperation und einer Suchoperation nach der Abtastoperation; und
Durchführen einer Wi-Fi-P2P-Verbindung mit der externen Vorrichtung durch den Verbindungskanal.

8. Wi-Fi-P2P-Verbindungsverfahren nach einem der Ansprüche 5 bis 7, das ferner aufweist:
Durchführen der Wi-Fi-P2P-Funktion als Reaktion darauf, dass ein Benutzerbefehl zum Ausführen der Wi-Fi-P2P-Funktion empfangen wird.

## Revendications

1. Appareil électronique comportant :
un module Wi-Fi configuré pour réaliser une communication Wi-Fi ; et
une commande configurée pour commander le module Wi-Fi en vue de sélectionner une pluralité de canaux, commander le module Wi-Fi en vue de réaliser une opération de balayage via chaque canal de la pluralité de canaux en réaction à l'exécution d'une fonction entre pairs (P2P) par Wi-Fi, et commander le module Wi-Fi en vue de déterminer un canal de connexion avec un dispositif externe disposé à réaliser une communication P2P par Wi-Fi sur la base d'un nombre de paquets de réponse de sondage reçu via chaque canal de la pluralité de canaux.

2. Appareil électronique selon la revendication 1, la commande étant en outre configurée pour commander le module Wi-Fi en vue d'émettre un paquet de demande de sondage via chaque canal de la pluralité de canaux, de recevoir les paquets de réponse de sondage correspondant au paquet de demande de sondage, et commander le module Wi-Fi en vue de déterminer un canal de la pluralité de canaux présentant un nombre minimal des paquets de réponse de sondage en tant que canal de connexion en comptant le nombre des paquets de réponse de sondage reçus via chaque canal de la pluralité de canaux.

3. Appareil électronique selon la revendication 1 ou 2,
la commande étant en outre configurée pour commander le module Wi-Fi en vue de rechercher un dispositif externe configuré pour réaliser la communication P2P par Wi-Fi en réalisant une opération d'écoute et une opération de recherche après l'opération de balayage, et étant configurée pour commander la connexion P2P par Wi-Fi avec le dispositif externe via le canal de connexion.

4. Appareil électronique selon l'une quelconque des revendications 1 à 3, comportant en outre :
une unité d'entrée configurée pour recevoir une consigne d'utilisateur visant à exécuter la fonction P2P par Wi-Fi,
la commande exécutant la fonction P2P par Wi-Fi en réaction à la réception de la consigne d'utilisateur.

5. Procédé de connexion entre pairs (P2P) par Wi-Fi pour appareil électronique, le procédé de connexion P2P par Wi-Fi comportant les étapes consistant à :
réaliser une opération de balayage via chaque canal d'une pluralité de canaux tout en sélectionnant séquentiellement la pluralité de canaux en réaction à l'exécution d'une fonction P2P par Wi-Fi, et
déterminer un canal de connexion avec un dispositif externe disposé à réaliser une communication P2P par Wi-Fi sur la base d'un nombre de paquets de réponse reçu via chaque canal de la pluralité de canaux.

6. Procédé de connexion P2P par Wi-Fi selon la revendication 5, la détermination du canal de connexion comportant les étapes consistant à :
émettre un paquet de demande de sondage via chaque canal de la pluralité de canaux ;
recevoir des paquets de réponse de sondage correspondant au paquet de demande de sondage ; et
déterminer un canal présentant des paquets de réponse de sondage minimums en tant que canal de connexion en comptant le nombre des paquets de réponse de sondage reçus via chaque canal de la pluralité de canaux lorsque l'opération de balayage est en cours de réalisation.

7. Procédé de connexion P2P par Wi-Fi selon la revendication 5 ou 6, comportant en outre les étapes consistant à :
rechercher le dispositif externe disposé à réaliser la communication P2P par Wi-Fi en réalisant une opération d'écoute et une opération de recherche après l'opération de balayage ; et
réaliser une connexion P2P par Wi-Fi avec le dispositif externe via le canal de connexion.

8. Procédé de connexion P2P par Wi-Fi selon l'une quelconque des revendications 5 à 7, comportant en outre l'étape consistant à :
réaliser la fonction P2P par Wi-Fi en réaction à la réception d'une consigne d'utilisateur visant à exécuter la fonction P2P par Wi-Fi.
